# EUROPEAN PATENT SPECIFICATION

(11) **EP 1 261 166 B1**
(45) Date of publication and mention of the grant of the patent: **17.01.2007**
(21) Application number: 02011040.9
(22) Date of filing: 17.05.2002
(51) Int. Cl.: H04L 29/06, H04L 12/18, H04N 7/16, H04N 5/00, H04N 7/088, H04N 7/173

(54) **Devices and processes for the transmission and implementation of control instructions for access to functionalities of receivers**
Vorrichtungen und Verfahren zur Übertragung und Implementierung von Steuerungsanweisungen zum Zugriff auf Empfängerfunktionalitäten
Dispositifs et procédés pour la transmission et la mise en oeuvre d'instructions de contrôle pour accéder à des fonctionnalités de récepteurs

(30) Priority: 23.05.2001 FR 0106771
(43) Date of publication of application: 27.11.2002
(73) Proprietor: Thomson Licensing, 92100 Boulogne-Billancourt (FR)
(72) Inventor: Lesenne, Laurent, 5690 Acigne (FR); Pasquier, Frédéric, 5890 Laille (FR)
(74) Representative: Kerber, Thierry

(56) References cited:
- EP-A- 1 028 551
- WO-A-00/64172
- HANDLEY M ET AL.: "Session Announcement Protocol (RFC 2974)" REQUEST FOR COMMENTS, [Online] October 2000 (2000-10), pages 1-18, XP002187917 Retrieved from the Internet: <URL:ftp://ftp.isi.edu/in-notes/rfc2974.tx t> [retrieved on 2002-01-21]
- "ADVANCED TELEVISION ENHANCEMENT FORUM SPECIFICATION (ATVEF)" ADVANCED TELEVISION ENHANCEMENT FORUM SPECIFICATION (ATVEF), XX, XX, February 1999 (1999-02), pages 1-37, XP002939077

## Description

The present invention relates to the transmission and the implementation of control instructions for access to functionalities of receivers, as well as to corresponding devices.

In order to be able to control the degree of accessibility to a receiver across a network, it is known to determine a set of authorized or prohibited actions and to communicate them to the receiver. To do this, a list of permissions referred to as the "white list" or conversely, a list of prohibited operations referred to as the "black list" is transmitted. The receiver records this information in memory and uses it subsequently to establish on reception of each message across the network whether it should pay heed to actions requested by this message.

This technique thus makes it possible to allocate variable rights to a set of receivers, then to send messages collectively, in particular by broadcasting. The expression "broadcasting" designates the transmitting of identical data to a set of destinations, whether this be performed in particular by radio broadcasting, via cable or via the Internet. The filtering of the operations dispatched in the messages is then performed directly at the level of the receivers, thereby enabling in particular various categories of receivers to be taken into account (for example according to distinct types of subscriptions to radio or audiovisual programmes) without having to worry about this when sending the messages.

Another advantage of the white or black lists is that it makes it possible to reduce the risks of fraudulent actions via the network, which could jeopardize the correct functioning of the receivers. It is in fact possible to authorize only accesses to functionalities required for the current functioning of the receiver, locking out accesses to all other responsive functionalities.

Hereinbelow and for simplicity, the expression "permission lists" will designate white or black lists, the prohibitions of access of a black list being regarded as implicitly defining permissions (complementary operations authorized).

Such permission lists are used in particular for dispatching services to interactive television sets.

However, even if the receivers are supplied with permission lists in permanent memory, it is desirable and usually necessary to modify these lists subsequently. To avoid the need for personnel to travel and to avoid manual operations, they are therefore generally rendered remotely updateable. Such a mode of updating actually becomes inevitable once a receiver alternately receives several types of services responding to distinct permissions. The modifications are then performed by dispatching new permission lists, transmitted selectively (by means of local identifiers) via the message transmission network.

A drawback of these dispatchings of permissions via the network is that they are open to the risks of the pirating of lists, as well as to the fraudulent production of false permission lists aimed at remote control of the normally inaccessible functionalities of receivers. Moreover, each updating of lists requires a set of laborious operations, both at the sending and the receiving end, which in certain circumstances have to be repeated often.

The patent application WO-0064172 relates to a method for enabling and/or disabling selected types of broadcast triggers. In that respect, some specific rules for ignoring or not ignoring received triggers are formerly provided to a receiver, by automatic loading through broadcast communication over the airwaves or through downloading from the Internet. Those rules can be updated periodically in a similar way. The rules are stored in the receiver and may apply to broadcasting messages including not only triggers, but also announcements. In practice, such a rule may for example contain a string of characters which if present in the received trigger indicates that the rule applies to the trigger.

Though that technique may increase flexibility in the provided permissions, it keeps the necessity to transmit regularly updated set of rules for maintaining relevant selections of authorized and prohibited functionalities. Thus, it remains sensitive to risks of fraudulent actions and may still require tedious operations.

The subject of the present invention is a device for the transmission of control instructions for access to functionalities of one or more receivers, which allows simplified updating of the permissions granted to the receivers, both at send and at receive level.

Moreover, the transmission device according to the invention allows increased security of such updates with regard to possible fraudulent actions.

The invention also relates to a device for implementing control instructions which is able to modify the permissions within a receiver, tailored to the transmission device of the invention.

The invention, which applies in particular in the field of interactive television, is also concerned with a sender and a receiver respectively comprising transmission and implementation devices in accordance with the invention, and with processes, a computer program and a corresponding message.

To this end, the subject of the invention is a device for the transmission of control instructions for access to functionalities of at least one receiver, according to claim 1. This transmission device comprises means for registering permission identifiers in messages intended for this receiver.

According to the invention, the registration means are provided for registering the permission identifiers in service announcement messages. These permission identifiers consist of indicators each having a value chosen from an authorization value and a prohibition value relating to access to at least one of the functionalities of the receivers.

The expression "service announcement message" is understood to mean a message dispatched upstream within the framework of a service, giving information and instructions relating to the subsequent dispatching of one or more other messages of this service. These other messages are bearers of content ("content messages") or of immediate-triggering instructions ("triggers"). The service announcement message comprises a header in the SAP format (standing for Session Announcement Protocol) and a payload in the SDP format (standing for Session Description Protocol).

Surprisingly, the permissions are therefore not dispatched in a centralized manner, in the form of white or black lists, but specifically for each service concerned, within the actual service announcement message. This embodiment offers great flexibility of action, since it makes it possible to adapt specifically and in real time to each service. Moreover, it allows increased reliability since it avoids the need to dispatch lists containing in essence all of the access control information.

In an advantageous form of deployment of the permissions, each of the service announcement messages comprises a variable-length authentication field, and the registration means are provided for registering the permission identifiers in this authentication field. This embodiment is beneficial through its simplicity, since it allows very flexible utilization of a field already provided in the service announcement message, without having to add a specific field.

In another advantageous form of deployment of the permissions, each of the announcement messages comprises a payload field, and the registration means are provided for registering the permission identifiers in this payload field. In this way, greater flexibility is available in defining the permissions.

The device of the invention also allows increased security, as set forth hereinbelow. In what follows, the following designations are employed:
- "authentication", a procedure relating to a guarantee of origin and of integrity of messages travelling through a network, relying on the use of digital signatures contained in the messages and produced by means of keys before sending the messages,
- "encryption", a procedure of substituting for a plain text, an unintelligible text which cannot be utilized as is,
- "decryption", a procedure for replacing an encrypted text with a plain text, obtained by returning the encrypted text to its initial form,
- "encipherment", a procedure for determining an encrypted text from a message or from a portion of a message, this encrypted text being used either as replacement for a plain text (encryption), or as a signature (authentication),
- "decipherment", a procedure of at least partial reconstruction of a plain text from an encrypted text, either for attesting the origin and the integrity of the message containing the text (authentication), or for replacing the encrypted text with the plain text (decryption),
- "securing", a procedure of enciphering a message or a part of a message, for authentication or encryption purposes,
- "identification", a procedure of using an encrypted text received in a message for identifying this message, either by its origin and its integrity (authentication), or by its content (decryption); in respect of authentication, the identification can comprise a deciphering of the signature, or an enciphering of the part of the message which served for the signature so as to compare the result with the signature received.

The transmission device preferably comprises enciphering control means for signing at least a part of each of said messages, that part including the permission identifiers.

It is thus possible to authenticate the origin and the content of the announcement messages, even as far as the permissions are concerned, thereby making it possible to considerably reduce the risks of interception of such an announcement message and of fraudulent modification of the permissions which it contains.

Preferably, the permission identifiers of the announcement message are not encrypted, so as to allow fast identification of the control information. This makes it all the more advantageous to take them into account in the digital signature affixed in the message.

Preferably, the announcement messages are ATVEF (i.e. according to the Advanced Television Enhancement Forum standard) service and/or system service announcement messages.

Each ATVEF announcement message of a service is followed by at least one HTTP (according to the HyperText Transfer Protocol method) content message then by one or more service triggers. The system announcement messages of a service, generally private and multicast, are for their part followed by a binary file of the service. The latter announcement messages advantageously have a form similar to that of the ATVEF announcement messages. A detailed description pertaining to the use of service announcement messages other than ATVEF announcement messages will be found in the European patent application filed on 23 October 2000 under the filing number 00402921.1.

According to a first form of the permissions, at least one of the permission identifiers pertains to functionalities for access, preferably automatic, to a modem for initiating a connection to an online server of a service operator. This service operator is advantageously connected to the transmission device.

According to a second form of the permissions, at least one of the permission identifiers pertains to functionalities for using a secure connection to an online server.

According to a third form of the permissions, at least one of the permission identifiers pertains to functionalities for access, preferably automatic, to at least one storage space for reading data or writing data permanently from or to that storage space. The storage space or spaces are preferably a hard disk, a flash memory and/or a chip card.

According to a fourth form of the permissions, at least one of the permission identifiers pertains to functionalities for access to a tuner of the receiver so as to modify a current station.

The various forms of the permissions are advantageously combined in the announcement messages.

The invention also concerns a message sender, characterized in that it comprises a transmission device according to any one of the embodiments of the invention.

It also applies to a device for the implementation of control instructions for access to functionalities of a receiver, according to claim 13. This implementation device comprises means for reading permission identifiers in messages received thereby.

According to the invention, the reading means are provided for reading the permission identifiers in service announcement messages, those identifiers consisting of indicators each having a value chosen from an authorization value and a prohibition value relating to access to at least one of the functionalities of the receiver. Moreover, the instruction implementation device is preferably provided for receiving the control instructions transmitted by a device for transmitting control instructions in accordance with any one of the embodiments of the invention.

The invention also relates to a message receiver characterized in that it comprises an implementation device according to the invention. This receiver is preferably provided for receiving the messages originating from a sender of messages in accordance with the invention.

The subject of the invention is moreover a computer program product according to claim 15. According to the invention, the latter comprises functionalities for implementing the means of the transmission device, or of the implementation device, for control instructions, in accordance with any one of the embodiments of the invention.

The expression "computer program product" is understood to mean a computer program medium which can consist not only of a storage space containing the program, such as a disk or a cassette, but also of a signal, such as an electrical or optical signal.

The invention also applies to a message intended to be dispatched over a network to at least one receiver, that message including at least one permission identifier, according to claim 16.

According to the invention, this message is a service announcement message, the permission identifier consisting of an indicator having a value chosen from an authorization value and a prohibition value relating to access to at least one facility of the receiver. Furthermore, it is preferably obtained by means of a transmission device according to any one of the embodiments of the invention.

Another aspect of the invention is a process for transmitting control instructions for access to functionalities of at least one receiver, according to claim 17. In this process, permission identifiers are registered in messages intended for the receiver.

According to the invention, the permission identifiers are registered in service announcement messages, those identifiers consisting of indicators each having a value chosen from an authorization value and a prohibition value relating to access to at least one of the functionalities of the receiver.

Moreover, this process for transmitting control instructions is preferably implemented by means of a transmission device in accordance with any one of the embodiments of the invention.

Yet another aspect of the invention is a process for implementing control instructions for access to functionalities of a receiver, according to claim 18. In this process, permission identifiers are read from messages received by the receiver.

According to the invention, the permission identifiers are read from service announcement messages, those permission identifiers consisting of indicators each having a value chosen from an authorization value and a prohibition value relating to access to at least one of the functionalities of the receiver.

Moreover, this process for implementing control instructions is preferably implemented by means of an implementation device in accordance with the invention.

The invention will be better understood and illustrated by means of the following exemplary embodiments and implementations, which are in no way limiting, with reference to the appended figures in which:
- Figure 1 is a basic diagram showing a sender and a receiver of messages in accordance with the invention, implementing a transmission of permissions with a first form of selection of the encipherment/identification keys;
- Figure 2 represents in greater detail a first embodiment of the sender of Figure 1, usable for authentication;
- Figure 3 illustrates the content of an ATVEF service announcement message containing an authentication field with permission identifiers, which is dispatched by the sender of Figure 2;
- Figure 4 details the content of the authentication field of Figure 3;
- Figure 5 illustrates the content of an intermediate version of the message produced by the sender of Figure 2, with filling-in of the authentication field;
- Figure 6 shows broadcasters of the radio broadcasting type, controlled by a central server, involving senders in accordance with that of Figure 2;
- Figure 7 represents in greater detail a first embodiment of the receiver of Figure 1, usable for the authentication of ATVEF service messages or system service messages dispatched by the sender of Figure 2 and for the implementation of corresponding permissions, and for the decrypting of these messages;
- Figure 8 represents in greater detail a second embodiment of the sender of Figure 1, usable for the transmission of permissions with combined encryption and authentication;
- Figure 9 illustrates the content of an ATVEF service announcement message containing an authentication field containing permissions and an encryption field, which is dispatched by the sender of Figure 8;
- Figure 10 diagrammatically shows a signature library implementing a second form of selecting the keys, with blocks of keys, which is used as a variant in the sender of Figure 1;
- Figure 11 diagrammatically shows an authentication library with blocks of keys corresponding to the library of Figure 10, used as a variant in the receiver of Figure 1;
- Figure 12 illustrates the content of a variant of an ATVEF service announcement message containing an authentication field with permission identifiers, which is dispatched by the sender of Figure 2;
- and Figure 13 details the content of the authentication field of Figure 12.

The figures are regarded as forming an integral part of the disclosure.

In the figures, identical or similar elements are designated by the same references. Moreover, the functional entities described and illustrated do not necessarily correspond to physically distinct entities of the systems, but may for example consist of functionalities of one and the same piece of software or of circuits of one and the same component.

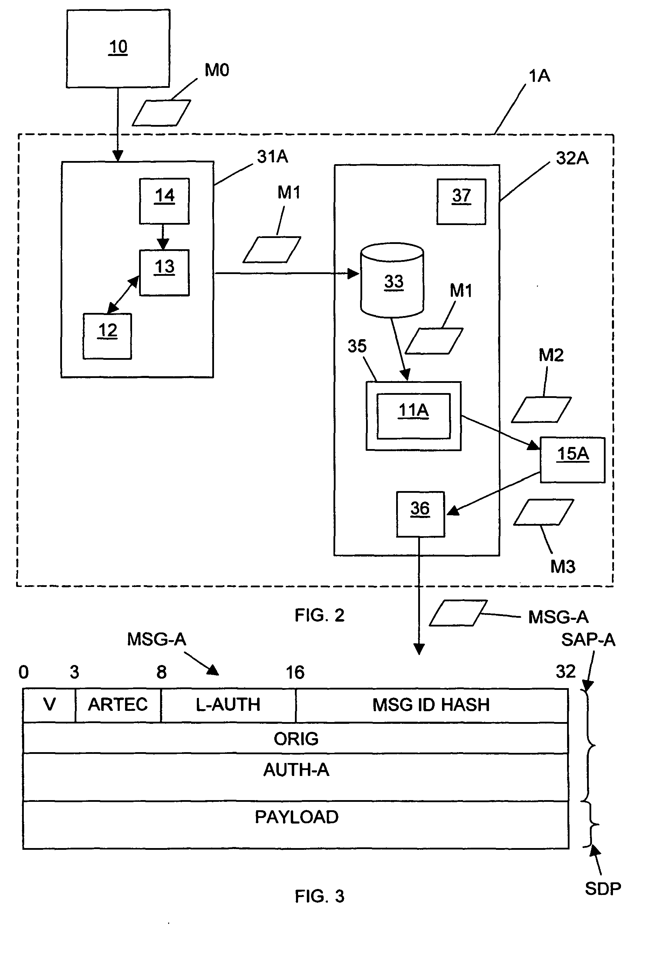

In Figures 3 to 5, 9, 12 and 13, the numbers indicated give, in bits, the distributions of fields in the messages represented. Moreover, the suffixes A and C are used to designate authentication entities, the suffix B for encryption entities and the suffix A' for authentication entities after encryption.

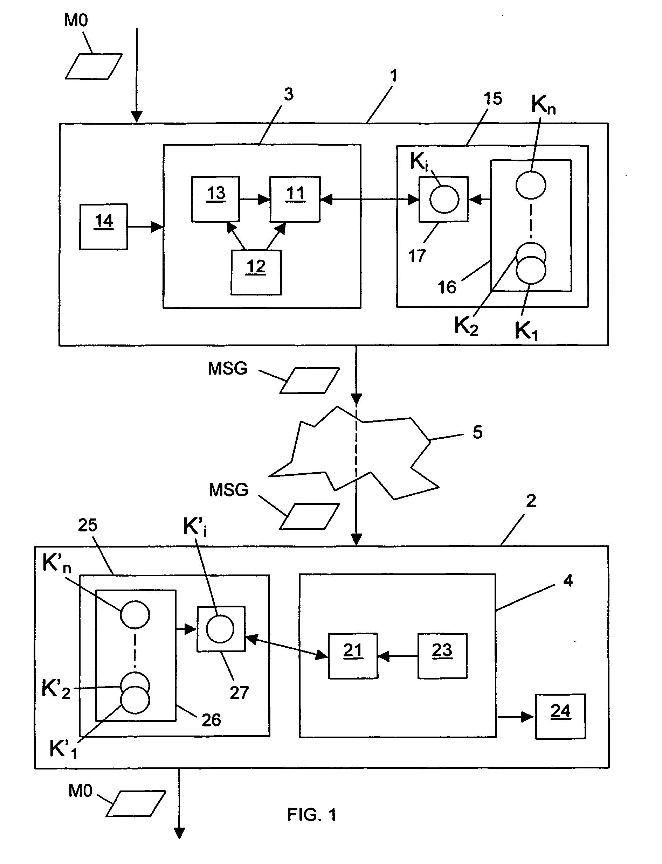

A send and receive assembly comprises (Figure 1) one or more senders 1 of MSG messages via a network 5 to one or more receivers 2. In the example detailed below, the network 5 is a broadcasting unidirectional transmission network and we concentrate on a general broadcasting server (associated with the sender 1) sending to a plurality of customers (associated respectively with the receivers 2). For simplicity, we concentrate on just one of the senders 1 and one of the receivers 2.

Very diagrammatically, the sender 1 is provided so as to receive a message M0 and transform it into the message MSG to be sent, by adding various items of information intended for transfer over the network 5 and for the reading of the message MSG and of possible subsequent messages by the appropriate receivers 2. Correspondingly, the receiver 2 is provided to extract from the message MSG received the meaningful content represented by the message M0. The message M0 is preferably a message of a particular type (service announcement message), as detailed further below, the sender 1 and the receiver 2 not processing all the types of messages in the same way.

The sender 1 comprises in particular (Figure 1) various elements intended for this transformation of the message M0, such as in particular:
- a unit 14 for registering permissions, which is designed to insert permission identifiers PERM into the messages M0; these identifiers PERM make it possible to transmit control instructions to the receiver 2 for access to various functionalities of the latter;
- a device 3 for securing messages, for defining judicious modes of encipherment (signature or encryption) of at least a part of the message M0, for triggering this encipherment and inserting information for utilizing the enciphered parts, intended for the receiver 2, into the message M0; in the example chosen, the registration unit 14 is upstream of the securing device 3, in the sender 1; as variants, their positions are reversed, or at least one of these two subassemblies is upstream of the sender 1;
- and an encipherment library 15, for example a library of dynamic links or DLL (Dynamic Link Library), comprising an enciphering module 17; by convention, this library 15 is allocated to the sender 1, although in practice it may be a program simply accessible by the sender in the strict sense.

More precisely, the encipherment library 15 is furnished with an indexed table 16 of enciphering keys K₁, K₂ ... Kₙ, the enciphering module 17 being designed to perform the encipherment according to one of the enciphering keys Kᵢ, as a function of instructions given by the message securing device 3. Moreover, the latter comprises:
- an encipherment control unit 11, capable of triggering the enciphering module 17 by communicating the necessary information thereto, in particular regarding the choice of the enciphering key Kᵢ to be used;
- a unit 12 for changing current key, making it possible to modify the current key Kᵢ to be used by dispatching corresponding information to the enciphering control unit 11; this unit 12 relies for example on random (both as regards the occurrences and the chosen values) modifications of the current key Kᵢ, with possibility of direct intervention by a user;
- and a unit 13 for registering in the message M0 a key identifier KeylD, making it possible to indicate for the attention of the receiver 2 the current enciphering key Kᵢ chosen; in the example presented, this registration unit 13 routinely performs the recording of the key identifier KeylD in the messages M0 of the type concerned.

Similarly, the receiver 2 comprises in particular:
- a unit 24 for reading the permission identifiers PERM in the message MSG received;
- a device 4 for identifying messages, for defining the relevant modes of identification (by deciphering/enciphering for authentication or decryption) of the enciphered part of the message MSG and for triggering this identification;
- and an identification library 25 comprising an identification module 27 and allocated by convention to the receiver 2.

More precisely, the identification library 25 is furnished with an indexed table 26 of identification keys K'₁, K'₂ ... K'ₙ, corresponding one to one to the enciphering keys K₁, K₂ ... Kₙ of the enciphering library 15. The identification module 27 is designed to perform the identification according to one of the identification keys K'ᵢ, as a function of instructions given by the message identification device 4. Moreover, the latter comprises:
- an identification control unit 21, capable of triggering the identification module 27 by communicating the necessary information thereto, in particular regarding the choice of the identification key K'ᵢ to be used;
- and a unit 23 for extracting from the message MSG the key identifier KeylD, giving the current identification key K'ᵢ chosen in correspondence with the current enciphering key K'ᵢ of the sender 2.

The succinct account given above is essentially functional, and it is exclusively centred around specific features in conjunction with a particular assembly for securing and identifying messages. The sender 1 can in reality comprise several securing devices such as that referenced 15, possibly in combination. For example, the securing of the messages combines encryption and signature, and/or distinct devices are applied respectively to various types of messages. Similarly, the receiver 2 can comprise several identification devices. Such possibilities will become more clearly apparent in the light of the examples hereinbelow of particular embodiments.

A first embodiment of the sender 1, referenced 1A (Figure 2), is applied to authentication. In this embodiment, the sender 1A subjects only the service announcement messages M0 to the operations for securing and registering the permission identifiers PERM, the other types of messages (such as content messages and triggers) not being subjected thereto. The service announcement messages considered are by way of illustration ATVEF announcement messages or system announcement messages, these two types of messages having a similar structure in the examples considered. The messages MSG produced, denoted MSG-A, are subjected to general broadcasting via the network 5.

In the example set forth, the enciphering keys Kᵢ (signature keys) are moreover private keys, and the identification keys K'ᵢ (authentication keys) public keys which may be distributed to the customers, including possibly via the network 5 (transmission is then preferably made secure). By way of more specific example, the signature keys Kᵢ have 596 bytes each and the identification keys K'ᵢ are deciphering keys of 148 bytes each, these keys being created respectively from the signature keys Kᵢ and transferred so as to reside at the customers' premises. The indexed tables 16 and 26 of respectively signature and authentication keys each comprise for example 10 corresponding keys.

The sender 1A essentially comprises:
- a server drive system 31, referenced 31A, including the unit 12 for changing current key, the unit 13 for registering the key identifier KeylD and the unit 14 for registering the permission identifiers PERM; this drive system 31A is designed to receive the message M0 from an information source 10 and to produce a message M1, containing the key identifier KeylD for authentication, denoted KeylD[SGN], and the permission identifiers PERM but without signature;
- a broadcasting server 32A comprising in particular a control unit 37 controlling the operation of the assembly of elements of the server 32A (links not represented in Figure 2 for simplicity) and a database 33 designed to gather the messages M1 originating from the drive system 31A; this broadcasting server 32A is intended to transform the message M1 into the message MSG-A;
- and the enciphering library 15, in the form of an authentication library 15A.

The broadcasting server 32A also comprises two modules acting successively on the message M1: a completion module 35 and an encapsulation module 36. The completion module 35, which contains the enciphering control unit 11 in the form of an authentication control unit 11A, is responsible for registering complementary information (Internet addresses, ports, etc.) in the message M1 so as to produce a message M2, and for calling upon the authentication library 15A so as to produce a signature SGN and integrate it into the message M2, thus producing a message M3. The presence of the authentication key identifier KeylD[SGN] in the message M2 dispatched to the library 15A allows the latter to select the desired key Kᵢ immediately so as to generate the signature SGN. Advantageously, the current enciphering key Kᵢ is preserved in memory in the library 15A.

The subcontracting by the broadcasting server 32A of the signature to the library 15A, as well as the possible recording of the current key Kᵢ in the library 15A rather than in the server 32A, allow the latter to retain a character of a general nature. What is more, they allow the drive system 31A and the library 15A to retain together control of the operations relating to the key identifiers KeylD[SGN] and permission identifiers PERM. Moreover, the addition of the signature SGN at the end of the chain, just before broadcasting by the broadcasting server 32A, is beneficial since the latter can thus be fed by numerous customers without it being necessary to duplicate the signature library 15A and the enciphering keys Kᵢ, and since the modification of the key identifier KeylD[SGN] can be centralized. Furthermore, in case of compression and/or encryption, the signature is effected after these operations.

The signature SGN is calculated preferably over the whole of the announcement message M2, including the header (which contains in particular the identifiers KeylD[SGN] and PERM) and the payload, thus making it possible in particular to detect any external modification of the data relating to the current signature key KeylD[SGN] (hence for authentication by the customers) and to the permissions.

The encapsulation module 36 is intended to transform the announcement message M3 by chopping and addition of layers for transport over the network 5. In the example presented, the module 36 generates IP (Internet Protocol) packets with UDP (Unidirectional Data Protocol)/IP/SLIP (Serial Line IP) layers. For content messages, the module 36 uses, beforehand, the UHTTP (Unidirectional HyperText Transfer Protocol) protocol and the MIME (Multipurpose Internet Mail Extensions) format.

The message MSG-A thus signed allows each of the customers to verify the authenticity of the services provided: if the customer recognizes the signature SGN as valid, he opens listening sockets for the content messages and possibly for the triggers which have to follow. In the converse case, the customer declines to take the announcement message MSG-A into consideration. To authenticate the signature SGN, the customer uses the key identifier KeylD[SGN], which allows him immediately to select the appropriate identification key K'ᵢ from the corresponding identification library 25 (authentication library). He is thus able to decide rapidly whether to open the sockets or not and thus avoid missing out on all or some of the content packets arriving subsequently. For example, when a first content packet is broadcast 500 ms after the announcement message, it is absolutely essential for all the signature verification and socket opening operations to have been executed during this time span.

A specific implementation of the sender 1A is illustrated hereinbelow. In this example, the announcement messages MSG-A of the ATVEF type are broadcast on a multicast IP address 224.0.1.113, port 2670, and those of the system type on a multicast IP address 235.0.1.113, port 32670. Each of the messages MSG-A (Figure 3) consists of a header in the SAP format denoted SAP-A and a payload in the SDP format, the header SAP-A comprising the following fields:
- version V of SAP (3 bits, V=1);
- ARTEC (5 bits) composed of 5 items:
   - type of address A (0 for the IPv4 protocol, 1 for IPv6);
   - reserved field R (0);
   - type of message T (0 for a session announcement packet, 1 for a session erasure packet);
   - encryption field E (for "Encryption": 0 for SDP unencrypted, 1 for SDP encrypted);
   - compression C (0 for uncompressed payload, 1 for compressed payload);
- length L-AUTH (unsigned value on 8 bits) of an authentication field AUTH referenced AUTH-A and inserted just before the SDP, and expressed as a number of 32-bit words;
- hash identifier (protection algorithm used by the Internet for digital signatures) MSG ID HASH (on 16 bits), the hash value having to change whenever a field of the SDP is modified; when this identifier equals 0, the customer must always subject the SDP to a parsing ;
- IP address denoted ORIG (1 word of 32 bits) of the sender 1A, hence of the broadcasting server 32A; this address can be set to 0.0.0.0 for a zero value of the hash identifier and in the absence of passage through a proxy ;
- and authentication field AUTH-A, whose length is determined by the parameter L-AUTH.

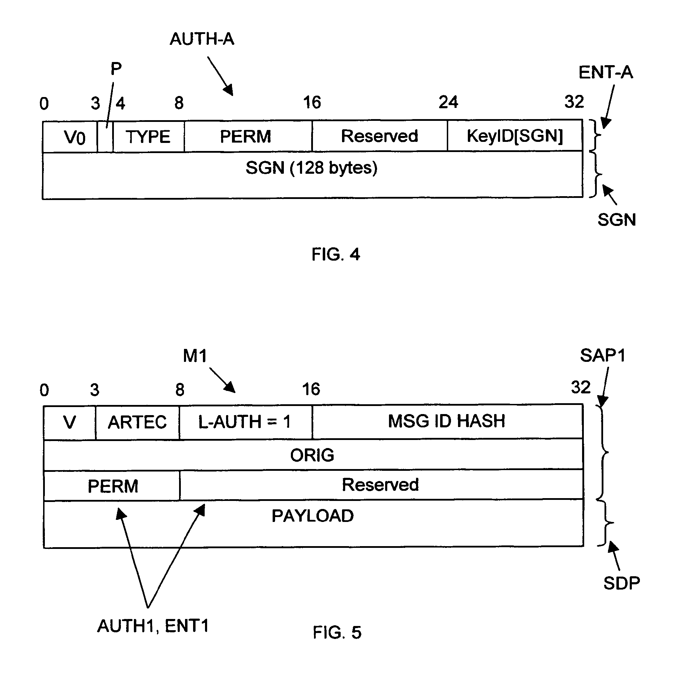

The authentication field AUTH-A (Figure 4) comprises not only a signature field SGN of 128 bytes (size chosen as a function of system limitation), but also a specific authentication header denoted ENT-A occupying four bytes, which includes the following subfields:
- version V of protocol used (3 bytes, V=1);
- padding indicator P (1 bit), which serves to signal the presence of possible padding so as to culminate in an authentication field having a total length which is a multiple of double-words (32-bit words); in the present case, P=0 (no padding) since the authentication field has a total length of 132 bytes;
- type of authentication used TYPE (4 bits); in this instance, TYPE=0 (PGP format, standing for Pretty Good Privacy);
- PERM permission flags (8 bits);
- field reserved (8 bits) for future use;
- key identifier KeyID[SGN] (8 bits).

The header ENT-A therefore contains two bytes which are especially useful for the customers: those of the fields KeyID[SGN] and PERM, which respectively allow the customers to immediately determine the correct authentication key K'ᵢ and to ascertain the appropriate permissions in respect of the subsequent messages of the service (content messages and triggers).

In the example presented, the byte available for the permission flags PERM is utilized in the form of a mask of eight values. The permission flags PERM pertain to accesses to the following functionalities, relating to so-called critical resources of the receiver 2 (the authorization values are first given in hexadecimal notation):
- 0x0001: access to a modem of the receiver 2 so as to initiate a connection to an online server of a service operator associated with the sender 1;
- 0x0002: access to a modem of the receiver 2 so as to initiate a connection to an online server of any service operator;
- 0x0004: use of a secure connection to an online server;
- 0x0008: access to a hard disk of the receiver 2 so as to read data therefrom or write data thereto permanently;
- 0x00010: access to a flash memory of the receiver 2 so as to read data therefrom or write data thereto permanently;
- 0x00020: access to a chip card of the receiver 2 so as to read data therefrom or write data thereto permanently;
- 0x00040: access to a tuner of the receiver 2 so as to modify a current station.

In a variant embodiment, the byte available for the permissions is used in the form of a table with 256 entries, each of the entries corresponding to a unique permission level. As in the example above, eight permissions are obtained which can be inter-combined.

The number of permissions can be extended without difficulty, in particular by incorporating the reserved field of one byte into the permission field (switch to sixteen permissions) and/or by allocating two double-words instead of one to the header ENT-A of the authentication field AUTH-A.

While operational, the drive system 31 adds a header in the SAP format to the service announcement message M0, integrating therein in particular the permission flags PERM for this service and possibly a key identifier KeylD[SGN] (the latter is configurable by the drive system 31, but by default, is determined by the library 15A). The length L-AUTH of the authentication field AUTH-A is fixed at one double-word (L-AUTH=1), in such a way as to register the header ENT-A therein without the signature SGN. The message M1 obtained (Figure 5) then contains in the authentication field AUTH1 (reduced to a header ENT1) of the header in the SAP format (denoted SAP1) only the permission flags PERM and a reserved field, initialized to zero. This message is received in the database 33 of the broadcasting server 32A.

The completion module 35 then verifies whether the header SAP1 is present (if not, it adds it without signature), registers in M1 the complementary information required (so-called patch of the SDP with addresses and ports of the content messages and triggers), and calls upon the library 15A, passing as arguments a buffer memory containing the message M1 and a size of the buffer.

The library 15A performs the following operations:
- verification of whether the permission flags PERM are present; if they are, normal continuation of operations; if they are not, return to the broadcasting server 32A with error code; in an improved version, should the permission flags PERM be absent, allocation of a default mask;
- verification of whether the service announcement message M1 is already signed; if it is, return to the broadcasting server 32A;
- if it is not, updating of the length L-AUTH to 132 bytes (0x21 double-words), addition and updating of the header ENT-A of the authentication field AUTH-A, calculation (with L-AUTH=1) and addition into the buffer of the signature SGN and updating of the size of the buffer; the signature SGN is determined from the header SAP1 as a whole (not containing the signature field SGN, since L-AUTH=1) and from the payload of the message M1; it is obtained by the RSA (Rivest - Shamir - Adleman) algorithm, by means of the calculation of a hash MD5 over this whole, of the recovery of the appropriate current signature key Kᵢ and of the calculation of the RSA signature on hash with this key Kᵢ; in a variant embodiment, the authentication field AUTH-A is totally ignored in respect of the signature (L-AUTH=0 instead of a double-word);
- and return to the broadcasting server 32A.

Next, the encapsulation module 36 encapsulates the message M3 thus obtained, before general broadcasting over the network 5.

With this technique, the signature is calculated just once per service (it is calculated on the announcement message), whether this service be dispatched as a carrousel or in one occurrence (one shot).

To modify the key identifier KeylD[SGN], a message is for example dispatched to the broadcasting server 32A across an interface for the programming of applications or API (Application and Programming Interface), the server 32A then merely notifying the library 15A of the new value of this identifier - the modification is for example performed routinely every month.

In an illustrative example hereinbelow of service announcement messages at input (M1) and at output (MSG-A) of the broadcasting server 32A, the header SAP1 is indicated by bold characters between square brackets, the header (ENT1, ENT-A) of the authentication field (AUTH1, AUTH-A) being underlined, and the payload being indicated by normal characters (the notation is hexadecimal).

The message M1, associated with L-AUTH=0x01, PERM=0x27 and with three reserved bytes equal to 0x00, is as follows:

| | | | | | | | | | |
|---|---|---|---|---|---|---|---|---|---|
| 00000000 | **[2001** | **0000** | **53AA** | **0B8D** | **2700** | **0000]** | 763D | 300A | ...S...'...v=0. |
| 00000010 | 6F3D | 2D20 | 3935 | 3530 | 3035 | 3931 | 3320 | 3935 | o=- 955005913 95 |
| 00000020 | 3530 | 3035 | 3931 | 3320 | 494E | 2049 | 5034 | 2031 | 5005913 IN IP4 1 |
| 00000030 | 3732 | 2E33 | 302E | 3930 | 2E31 | 3630 | 0A73 | 3D63 | 72.30.90.160.s=c |
| 00000040 | 6D6F | 6E63 | 686F | 6978 | 0A65 | 3D64 | 7570 | 6F6E | monchoix.e=dupon |
| 00000050 | 7440 | 7468 | 6D75 | 6C74 | 692E | 636F | 6D0A | 703D | t@thmulti.com.p= |
| 00000060 | 2B31 | 2D36 | 3537 | 2D34 | 3733 | 2D34 | 3833 | 300A | +1-657-473-4830. |
| 00000070 | 613D | 6C61 | 6E67 | 3A65 | 6E0A | 613D | 7476 | 652D | a=lang:en.a=tve- |
| 00000080 | 656E | 6473 | 3A33 | 3030 | 0A61 | 3D74 | 7665 | 2D74 | ends:300.a=tve-t |
| 00000090 | 7970 | 653A | 7072 | 696D | 6172 | 790A | 613D | 7476 | ype:primary.a=tv |
| 000000A0 | 652D | 6964 | 3A64 | 3631 | 3633 | 6164 | 612D | 3766 | e-id:d6163ada-7f |
| 000000B0 | 6164 | 2D33 | 6235 | 342D | 6262 | 3839 | 2D66 | 3166 | ad-3b54-bb89-f1f |
| 000000C0 | 6161 | 3430 | 3736 | 6637 | 620A | 613D | 7476 | 652D | aa4076f7b.a=tve- |
| 000000D0 | 7072 | 6F66 | 696C | 653A | 310A | 743D | 3020 | 300A | profile:1.t=0 0. |
| 000000E0 | 6D3D | 6461 | 7461 | 2032 | 3238 | 3530 | 2074 | 7665 | m=data 22850 tve |
| 000000F0 | 2D74 | 7269 | 6767 | 6572 | 0A63 | 3D49 | 4E20 | 4950 | -trigger.c=IN IP |
| 00000100 | 3420 | 3232 | 372E | 3337 | 2E33 | 322E | 3433 | 0A6D | 4 227.37.32.43.m |
| 00000110 | 3D64 | 6174 | 6120 | 3232 | 3835 | 3120 | 7476 | 652D | =data 22851 tve- |
| 00000120 | 6669 | 6C65 | 0A63 | 3D49 | 4E20 | 4950 | 3420 | 3232 | file.c=IN IP4 22 |
| 00000130 | 342E | 3337 | 2E33 | 322E | 3434 | 0A | | | 4.37.32.44. |

The message MSG-A obtained after processing of the message M0 by the broadcasting server 32A, associated with L-AUTH=0x21, PERM=0x27 and KeyID=0x07, is as follows:

| | | | | | | | | | |
|---|---|---|---|---|---|---|---|---|---|
| 00000000 | [**2021** | **0000** | **53AA** | **0B8D** | **2027** | **0007** | **6797** | **BE9E** | !..S... '..g... |
| 00000010 | **7169** | **8F8D** | **FDF1** | **B330** | **38FF** | **957C** | **D0A2** | **B515** | qi..... 08..I.... |
| 00000020 | **1F98** | **DABC** | **CB04** | **9F03** | **0EB8** | **3D27** | **E5AA** | **047A** | ..........=' ...z |
| 00000030 | **35AF** | **F2FF** | **DC65** | **4F04** | **28E3** | **CA3F** | **948D** | **1D8A** | 5....eO. (..?.... |
| 00000040 | **4540** | **D763** | **DB68** | **3ADD** | **CAEF** | **5EB1** | **4116** | **F939** | E@.c.h:...^.A..9 |
| 00000050 | **7C29** | **862F** | **E7B8** | **75C1** | **081C** | **3830** | **5A55** | **AEC2** | I)./..u...80ZU.. |
| 00000060 | **1031** | **62C0** | **E52D** | **AC19** | **1CCF** | **7471** | **D28E** | **8997** | .1b..-....tq.... |
| 00000070 | **7F46** | **9473** | **4F2A** | **B5EF** | **8047** | **2DE9** | **87EF** | **A49E** | .F.sO*...G-..... |
| 00000080 | **4E90** | **5DB7** | **0981** | **C001** | **DB17** | **F07F]** | 763D | 300A | N.].........v=0. |
| 00000090 | 6F3D | 2D20 | 3935 | 3530 | 3035 | 3931 | 3320 | 3935 | o=- 955005913 95 |
| 000000A0 | 3530 | 3035 | 3931 | 3320 | 494E | 2049 | 5034 | 2031 | 5005913 IN IP4 1 |
| 000000B0 | 3732 | 2E33 | 302E | 3930 | 2E31 | 3630 | 0A73 | 3D63 | 72. 30. 90. 160. s=c |
| 000000C0 | 6D6F | 6E63 | 686F | 6978 | 0A65 | 3D64 | 7570 | 6F6E | monchoix.e=dupon |
| 000000D0 | 7440 | 7468 | 6D75 | 6C74 | 692E | 636F | 6D0A | 703D | t@thmulti.com.p= |
| 000000E0 | 2B31 | 2D36 | 3537 | 2D34 | 3733 | 2D34 | 3833 | 300A | +1-657-473-4830. |
| 000000F0 | 613D | 6C61 | 6E67 | 3A65 | 6E0A | 613D | 7476 | 652D | a=lang:en.a=tve- |
| 00000100 | 656E | 6473 | 3A33 | 3030 | 0A61 | 3D74 | 7665 | 2D74 | ends:300.a=tve-t |
| 00000110 | 7970 | 653A | 7072 | 696D | 6172 | 790A | 613D | 7476 | ype:primary.a=tv |
| 00000120 | 652D | 6964 | 3A64 | 3631 | 3633 | 6164 | 612D | 3766 | e-id:d6163ada-7f |
| 00000130 | 6164 | 2D33 | 6235 | 342D | 6262 | 3839 | 2D66 | 3166 | ad-3b54-bb89-f1f |
| 00000140 | 6161 | 3430 | 3736 | 6637 | 620A | 613D | 7476 | 652D | aa4076f7b.a=tve- |
| 00000150 | 7072 | 6F66 | 696C | 653A | 310A | 743D | 3020 | 300A | profile:1.t=0 0. |
| 00000160 | 6D3D | 6461 | 7461 | 2032 | 3238 | 3530 | 2074 | 7665 | m=data 22850 tve |
| 00000170 | 2D74 | 7269 | 6767 | 6572 | 0A63 | 3D49 | 4E20 | 4950 | -trigger.c=IN IP |
| 00000180 | 3420 | 3232 | 372E | 3337 | 2E33 | 322E | 3433 | 0A6D | 4 227.37.32.43.m |
| 00000190 | 3D64 | 6174 | 6120 | 3232 | 3835 | 3120 | 7476 | 652D | =data 22851 tve- |
| 000001A0 | 6669 | 6C65 | 0A63 | 3D49 | 4E20 | 4950 | 3420 | 3232 | file.c=IN IP4 22 |
| 000001B0 | 342E | 3337 | 2E33 | 322E | 3434 | 0A | | | 4.37.32.44. |

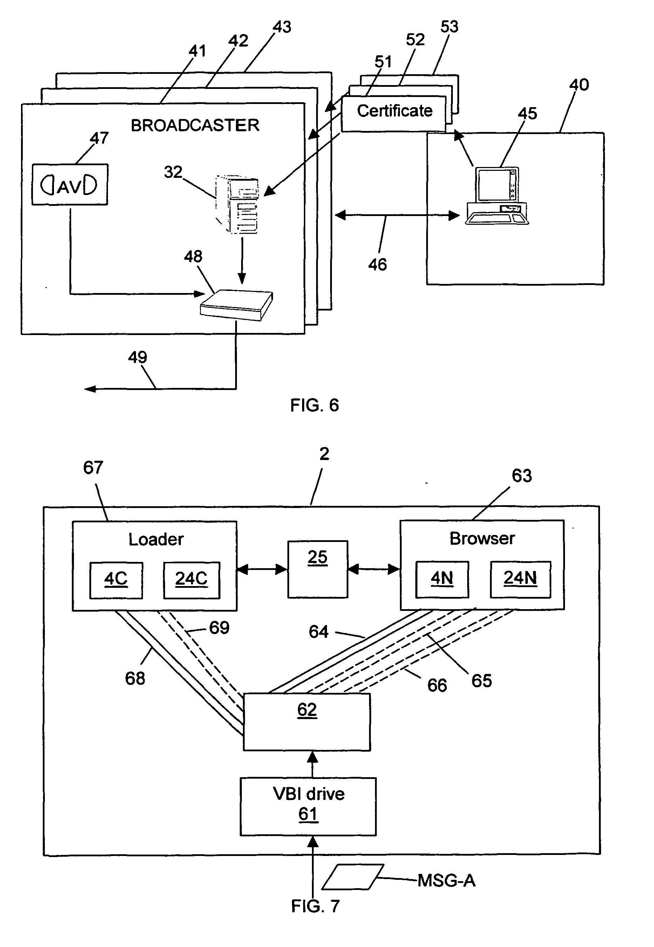

In a particular deployment of senders 1A (Figure 6), a central drive system 40 of a service operator, comprising a central server 45, is connected to broadcasters 41, 42 and 43 via leased lines 46.

Each of the broadcasters 41-43 comprises a broadcasting server 32, of the type of that 32A detailed hereinabove, as well as a device 47 for broadcasting audiovisual programmes and a VBI encoder referenced 48, responsible for encoding information originating from the server 32 and from the device 47 and for broadcasting it to the antenna 49. During operation, the central drive system 40 obtains from various sources (broadcasters, advertisers, content providers, etc.) information regarding services to be broadcast, programs their broadcasting and finally makes them available to the broadcasting server 32 slightly before their broadcasting. It guarantees in particular the authenticity of public keys through the delivery of digital certificates 51, 52 and 53 to the broadcasters 41 to 43 respectively. This central drive system 40 also fulfils the functions of the drive system 31 described above, so that the service announcement messages MSG broadcast by the broadcasters 41 to 43 can be selectively advised of the permissions and be signed by means of variable keys, without giving rise to adverse delays of authentication on reception.

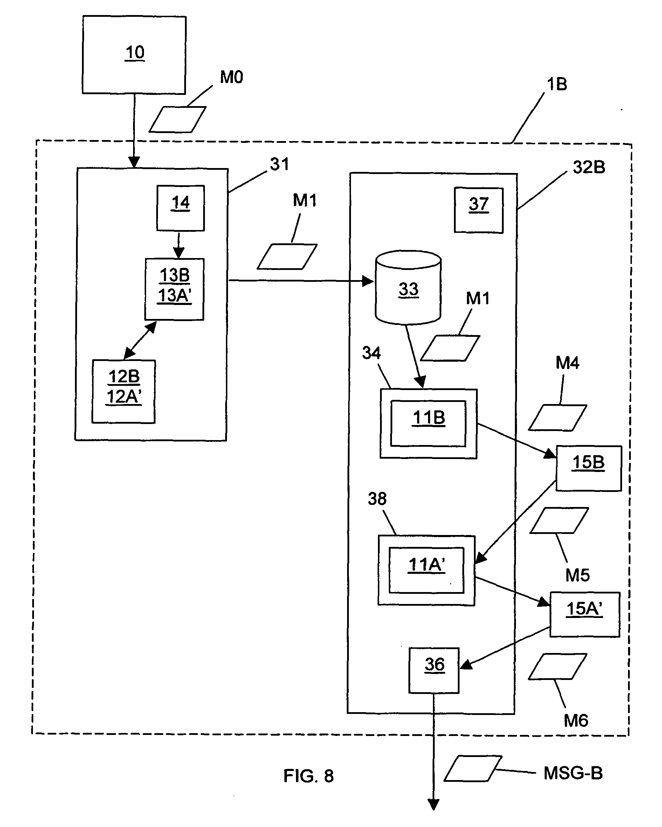

Each of the receivers 2 comprises in particular (Figure 7):
- a VBI drive referenced 61, designed to extract a payload from information received from the senders 1A (such as the broadcasters 41 to 43) and comprising a field WST (World Standard Teletext), to calculate error control codes FEC (Forward Error Correction) and to control a decoding of SLIP frames of the payload;
- a module 62 for decapsulating layers for transport on the network 5, capable of receiving from the drive 61 the decoded SLIP frames and of extracting therefrom, after decoding, the content of the IP/UDP frames, in the form of a header in the SAP format and of a payload in the SDP format for the service announcement messages MSG;
- a browser 63, provided with an identification device 4 and with a permission reading unit 24 (referenced 4N and 24N respectively), of the type of those described above,
- a loader 67, provided with an identification device 4 and with an optional permission reading unit 24 (referenced 4C and 24C respectively), of the type of those described above,
- and an authentication library of the type of that referenced 25 described above; the indexed table 26 of keys is stored in a permanent memory of the receiver 2, for example of the flash memory type, in a code of the library 25.

The browser 63 is designed to perform the following functions on receipt of each service announcement message MSG-A:
- recover the header and the payload of the message MSG-A via a listening socket 64;
- call a signature verification function in the library 25, passing it as input a pointer to the message MSG-A;
- and should authentication succeed, open listening sockets 65 and 66 respectively for the content messages and the subsequent triggers, by applying the permissions indicated by the permission flags PERM of the message MSG-A so as to specify access to the functionalities of the browser 63 to be applied to the broadcast application.

The library 25 signature verification function executes more precisely the following operations:
- calculation of a hash MD5 on the signatureless header SAP-A and payload as a whole, the indicator L-AUTH giving the length of the authentication field AUTH-A being set to 1; in a variant corresponding to that indicated for the signature calculation, the authentication field AUTH-A is ignored in respect of authentication, the indicator L-AUTH being set to 0;
- recovery of the key identifier KeylD[SGN] in the authentication field AUTH-A of the header SAP-A and selection of the appropriate authentication key K'ᵢ;
- verification of the signature SGN of the authentication field AUTH-A, of the RSA type, by recalculation on the hash of the signature by means of the selected key K'ᵢ; should the signature be invalid, return of the value 0;
- if the signature SGN is valid, return of the permission flags PERM.

Thus, the payload of the message MSG-A is ignored except in the case where authentication succeeds. In the converse case, no listening socket is opened for the subsequent messages of the service announced and the customer remains deaf to the data which arrive.

The operation of the loader 67 is similar in respect of a system announcement message, received via a listening socket 68: a socket 69 is opened only for subsequent content messages if the message is authenticated, by means of a call to the library 25.

A second embodiment of the sender 1, referenced 1B (Figure 8), is applied to a combination of encryption and authentication. This embodiment differs from the previous essentially by the presence in the sender 1 B of encryption elements, complementary to the signature elements and designed to act upstream of them. The encryption elements and the signature elements rely respectively on the selection of two current enciphering keys from two indexed tables 16 of keys (Figure 1), and call respectively on an encryption library 15B and a signature library 15A', of the type of the enciphering library 15 described in a general manner above. The receiver 2 includes an indexed decryption table corresponding to the indexed table of encryption keys, these decryption keys being preferably private. The indexed encryption and decryption tables comprise for example 10 keys each.

Thus, the drive system 31, referenced 31B, comprises units 12 for changing current key and also devices 13 for securing messages for encryption (respectively 12B and 13B) and for signature after encryption (respectively 12A' and 13A').

Moreover, the broadcasting server 32, referenced 32B, comprises a completion and encryption module 34 including an encryption control unit 11B and a signature module 38 downstream of the module 34, including a signature control unit 11A', the control units 11B and 11A' being of the type of the enciphering control unit 11. This server 32B integrates an authentication field AUTH, referenced AUTH-B, into the header in the SAP format, in a similar manner to the first embodiment.

The completion and encryption module 34 is responsible for adding complementary information required in the message M1 as in the previous embodiment, and for calling on the encryption library 15B so as to encrypt the message M4 thus obtained, transmitting an encryption key identifier KeyID[CRYPT] thereto. The enciphering module 17 of the library 15B (Figure 1) then carries out the encryption of the payload, but not of the initial data of the header or of the authentication field AUTH-B. The key identifier KeyID[CRYPT] is for example generated randomly.

The signature module 38 is designed to receive from the encryption library 15B a message M5 resulting from this encryption and comprising in particular an authentication key identifier KeylD[SGN], and to call on the signature library 15A' so as to obtain a signed message M6. The enciphering module 17 of the library 15A' (Figure 1) determines and affixes a signature pertaining to the message M5 as a whole, by means of the current key given by the key identifier KeylD[SGN], as in the previous embodiment.

The encapsulation module 36 plays the same role as previously and makes it possible to obtain the message MSG to be broadcast, denoted MSG-B.

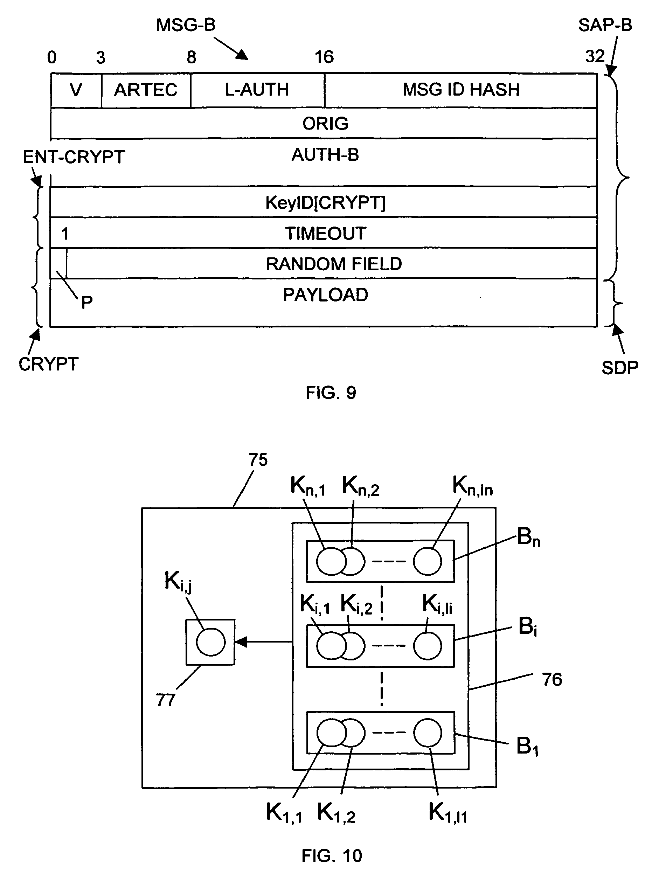

By way of illustration (Figure 9), the message MSG-B comprises, in addition to its payload, a header in the SAP format referenced SAP-B which is structured as follows:
- fields V, ARTEC, L-AUTH, MSG ID HASH and AUTH-B similar to those of the first embodiment;
- encryption key identifier KeyID[CRYPT] (1 double-word);
- indicator of time exceeded TIMEOUT (1 double-word), useful when the payload is encrypted and when the sending of the announcement message involves a proxy;
- padding indicator P (1 bit), signalling padding before encryption; the last byte of the decrypted payload then gives the number of padding bytes added;
- and a random field (31 bits) containing a true random number and intended to be discarded after decryption.

The set CRYPT of encrypted fields consists of the indicator P, of the random field and of the payload, while the identifier KeylD[CRYPT] and the field TIMEOUT form an unencrypted encryption header ENT-CRYPT.

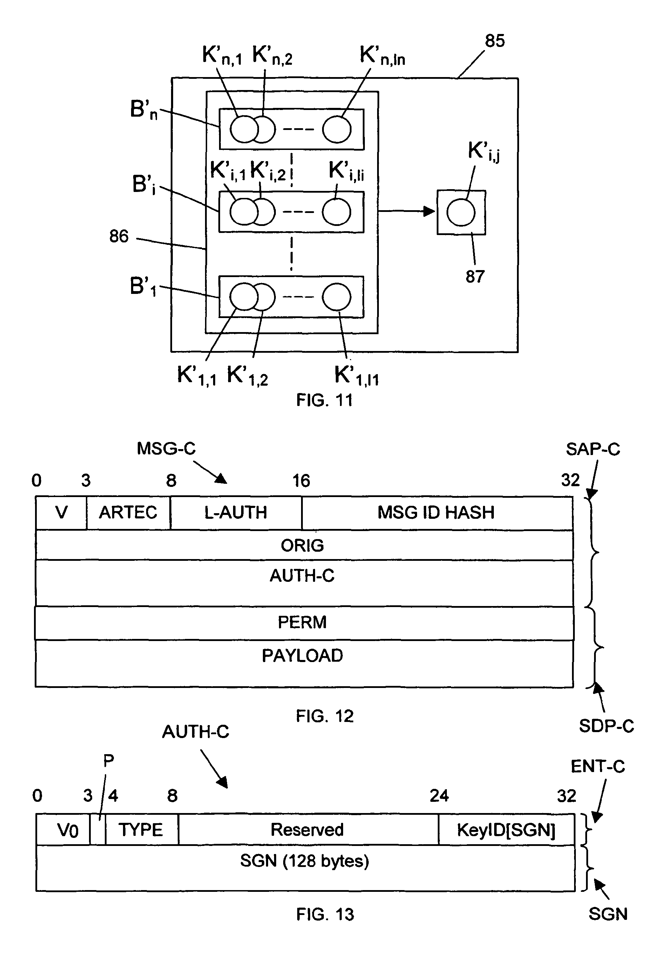

In a variant embodiment applicable to any one of the pairs of associated enciphering and identification libraries (Figures 10 and 11), the enciphering library 75 comprises an indexed table 76 of blocks B₁, B₂ ... Bₙ of enciphering keys, instead of a table of keys. Each of the blocks Bᵢ itself includes several keys K_{i,1}, K_{i,2} ... K_{i,li}, whose number may vary according to the block considered. Similarly, the identification library 85 comprises an indexed table 86 of blocks B'₁, B'₂ ... B'ₙ of identification keys, each of the blocks B'ᵢ including several keys K'_{i,1}, K'_{i,2} ... K'_{i,li} corresponding respectively to the keys K_{i,1}, K_{i,2}... K_{i,li} of the blocks Bᵢ of the enciphering library 75.

Knowledge of the key identifier KeylD does not therefore make it possible to ascertain in a one-to-one manner the key K_{i,j} chosen for the enciphering by the enciphering module 77, and hence the associated identification key K'_{i,j} which is to be used by the identification module 87 of the library 85, but only the blocks Bᵢ and B'ᵢ to which these keys respectively belong. All the keys of the identified block B'ᵢ must therefore be tried in succession until the decryption succeeds.

According to a variant deployment of the identifiers, the authentication key identifier KeyID[SGN] and/or permission identifier PERM are exterior to the authentication field AUTH in the header of the message MSG. Thus, the messages for authentication can be enciphered while including these identifiers in the signature calculation SGN, but excluding the authentication field AUTH (L-AUTH=0) therefrom.

In another embodiment (Figures 12 and 13), the permission flags PERM are disposed in the payload field. According to the example illustrated, the service announcement message MSG produced, referenced MSG-C, contains a header in the SAP format, denoted SAP-C, without permissions but with a reserved field of two bytes in the header ENT-C of the authentication field AUTH-C. Its payload in the SDP format, denoted SDP-C, includes the permission flags PERM on two bytes, for example at the start of the field. The permissions field needs more payload space than header space, since it now requires writing in text rather than binary format, and a permissions field identification label.

## Claims

1. Device for the transmission of control instructions for access to functionalities of at least one receiver (2), said transmission device comprising means (14) for registering permission identifiers (PERM) in messages (MSG) intended for said receiver (2),
**characterized in that** the registration means (14) are provided for registering the permission identifiers (PERM) in service announcement messages (MSG), said permission identifiers consisting of indicators each having a value chosen from an authorization value and a prohibition value relating to access to at least one of said functionalities of the receiver (2) for the service concerned by the service announcement message.

2. Transmission device according to Claim 1, **characterized in that** each of said announcement messages (MSG-A, MSG-B) comprises an authentication field (AUTH-A, AUTH-B) of variable length, and the registration means (14) are provided for registering the permission identifiers (PERM) in said authentication field.

3. Transmission device according to one of Claims 1 or 2, **characterized in that** each of said announcement messages (MSG-C) comprises a payload field (SDP-C), and the registration means (14) are provided for registering the permission identifiers (PERM) in said payload field.

4. Transmission device according to any one of the preceding claims, **characterized in that** it also comprises enciphering control means (11-A, 11-A') for signing at least a part of each of said messages (MSG), said part including the permission identifiers (PERM).

5. Transmission device according to any one of the preceding claims, **characterized in that** said announcement messages (MSG) are chosen among ATVEF service and system service announcement messages.

6. Transmission device according to any one of the preceding claims, **characterized in that** at least one of said permission identifiers (PERM) pertains to functionalities for access, preferably automatic, to a modem for initiating a connection to a first online server of a service operator.

7. Transmission device according to Claim 6, **characterized in that** said service operator is connected to said transmission device.

8. Transmission device according to any one of the preceding claims, **characterized in that** at least one of said permission identifiers (PERM) pertains to functionalities for using a secure connection to a second online server.

9. Transmission device according to any one of the preceding claims, **characterized in that** at least one of said permission identifiers (PERM) pertains to functionalities for access, preferably automatic, to at least one storage space for reading data or writing data permanently from or to said storage space.

10. Transmission device according to Claim 9, **characterized in that** said storage space belongs to the list including a hard disk, a flash memory and a chip card.

11. Transmission device according to any one of the preceding claims, **characterized in that** at least one of said permission identifiers (PERM) pertains to functionalities for access to a tuner of said receiver (2) so as to modify a current station.

12. Sender (1) of messages (MSG) **characterized in that** it comprises a transmission device according to any one of Claims 1 to 11.

13. Device for the implementation of control instructions for access to functionalities of a receiver (2), said implementation device comprising means (24) for reading permission identifiers (PERM) in messages (MSG) received by said receiver (2),
**characterized in that** the reading means (24) are provided for reading the permission identifiers (PERM) in service announcement messages (MSG), said permission identifiers consisting of indicators each having a value chosen from an authorization value and a prohibition value relating to access to at least one of said functionalities of the receiver (2) for the service concerned by the service announcement message,
said instruction implementation device being preferably provided for receiving said control instructions transmitted by a device for transmitting control instructions in accordance with any one of Claims 1 to 11.

14. Receiver (2) of messages (MSG) **characterized in that** it comprises an implementation device according to Claim 13, said receiver being preferably provided for receiving said messages (MSG) originating from a sender (1) of messages in accordance with Claim 12.

15. Computer program product, **characterized in that** it comprises functionalities for implementing said means (14, 24) of the device for transmitting control instructions in accordance with any one of Claims 1 to 11 or of the device for implementing control instructions in accordance with Claim 13.

16. Message (MSG) intended to be dispatched over a network to at least one receiver (2), said message including at least one permission identifier (PERM),
**characterized in that** said message (MSG) is a service announcement message, said permission identifier (PERM) consisting of an indicator having a value chosen from an authorization value and a prohibition value relating to access to at least one functionality of said receiver (2) for the service concerned by the service announcement message,
said message (MSG) preferably being obtained by means of a transmission device according to any one of Claims 1 to 11.

17. Process for transmitting control instructions for access to functionalities of at least one receiver (2), according to which permission identifiers (PERM) are registered in messages (MSG) intended for said receiver (2),
**characterized in that** the permission identifiers (PERM) are registered in service announcement messages (MSG), said permission identifiers consisting of indicators each having a value chosen from an authorization value and a prohibition value relating to access to at least one of said functionalities of the receiver (2) for the service concerned by the service announcement message,
said process for transmitting control instructions being preferably implemented by means of a transmission device in accordance with any one of Claims 1 to 11.

18. Process for implementing control instructions for access to functionalities of a receiver (2), according to which permission identifiers (PERM) are read from messages (MSG) received by said receiver (2),
**characterized in that** the permission identifiers (PERM) are read from service announcement messages (MSG), said permission identifiers consisting of indicators each having a value chosen from an authorization value and a prohibition value relating to access to at least one of said functionalities of the receiver (2) for the service concerned by the service announcement message,
said process for implementing control instructions being preferably implemented by means of an implementation device in accordance with Claim 13.

## Patentansprüche

1. Einrichtung zur Übertragung von Steuerungsanweisungen zum Zugriff auf Funktionalitäten mindestens eines Empfängers (2), wobei die Übertragungseinrichtung Mittel (14) zum Registrieren von Zulassungskennungen (PERM) in für den Empfänger (2) bestimmten Nachrichten (MSG) umfaßt,
**dadurch gekennzeichnet, daß** die Registrationsmittel (14) zum Registrieren der Zulassungskennungen (PERM) in Dienstansagenachrichten (MSG) vorgesehen sind, wobei die Zulassungskennungen aus Indikatoren bestehen, die jeweils einen Wert aufweisen, der aus einem Autorisierungswert und einem Verbotwert in bezug auf den Zugriff auf mindestens eine der Funktionalitäten des Empfängers (2) für den durch die Dienstansage betroffenen Dienst ausgewählt wird.

2. Übertragungseinrichtung nach Anspruch 1, **dadurch gekennzeichnet, daß** jede der Ansagenachrichten (MSG-A, MSG-B) ein Authentifikationsfeld (AUTH-A, AUTH-B) variabler Länge umfaßt und die Registrationsmittel (14) zum Registrieren der Zulassungskennungen (PERM) in dem Authentifikationsfeld vorgesehen sind.

3. Übertragungseinrichtung nach einem der Ansprüche 1 oder 2, **dadurch gekennzeichnet, daß** jede der Ansagenachrichten (MSG-C) ein Nutzsignalfeld (SDP-C) umfaßt und die Registrationsmittel (14) zum Registrieren der Zulassungskennungen (PERM) im dem Nutzsignalfeld vorgesehen sind.

4. Übertragungseinrichtung nach einem der vorhergehenden Ansprüche, **dadurch gekennzeichnet, daß** sie außerdem Chiffrierungssteuerungmittel (11-A, 11-A') zum Signieren mindestens eines Teils jeder der Nachrichten (MSG) umfaßt, wobei der Teil die Zulassungskennungen (PERM) enthält.

5. Übertragungseinrichtung nach einem der vorhergehenden Ansprüche, **dadurch gekennzeichnet, daß** die Ansagenachrichten (MSG) aus ATVEF-Dienst- und Systemdienstansagenachrichten ausgewählt werden.

6. Übertragungseinrichtung nach einem der vorhergehenden Ansprüche, **dadurch gekennzeichnet, daß** mindestens eine der Zulassungskennungen (PERM) Funktionalitäten für vorzugsweise automatischen Zugriff auf ein Modem zum Einleiten einer Verbindung zu einem ersten Online-Server eines Dienstbetreibers betrifft.

7. Übertragungseinrichtung nach Anspruch 6, **dadurch gekennzeichnet, daß** der Dienstbetreiber mit der Übertragungseinrichtung verbunden ist.

8. Übertragungseinrichtung nach einem der vorhergehenden Ansprüche, **dadurch gekennzeichnet, daß** mindestens eine der Zulassungskennungen (PERM) Funktionalitäten zur Verwendung einer sicheren Verbindung zu einem zweiten Online-Server betrifft.

9. Übertragungseinrichtung nach einem der vorhergehenden Ansprüche, **dadurch gekennzeichnet, daß** mindestens eine der Zulassungskennungen (PERM) Funktionalitäten für vorzugsweise automatischen Zugriff auf mindestens einen Speicherplatz zum Lesen von Daten oder permanenten Schreiben von Daten aus dem oder in den Speicherplatz betrifft.

10. Übertragungseinrichtung nach Anspruch 9, **dadurch gekennzeichnet, daß** der Speicherplatz zu der Liste gehört, die eine Festplatte, einen Flash-Speicher und eine Chipkarte enthält.

11. Übertragungseinrichtung nach einem der vorhergehenden Ansprüche, **dadurch gekennzeichnet, daß** mindestens eine der Zulassungskennungen (PERM) Funktionalitäten zum Zugriff auf einen Tuner des Empfängers (2) betrifft, um einen aktuellen Sender zu modifizieren.

12. Absender (1) von Nachrichten (MSG), **dadurch gekennzeichnet, daß** er eine Übertragungseinrichtung nach einem der Ansprüche 1 bis 11 umfaßt.

13. Einrichtung zur Implementierung von Steuerungsanweisungen zum Zugriff auf Funktionalitäten eines Empfängers (2), wobei die Implementierungseinrichtung Mittel (24) zum Lesen von Zulassungskennungen (PERM) in durch den Empfänger (2) empfangenen Nachrichten (MSG) umfaßt,
**dadurch gekennzeichnet, daß** die Lesemittel (24) zum Lesen der Zulassungskennungen (PERM) in Dienstansagenachrichten (MSG) vorgesehen sind, wobei die Zulassungskennungen aus Indikatoren jeweils mit einem Wert bestehen, der aus einem Autorisierungswert und einem Verbotwert in bezug auf den Zugriff auf mindestens eine der Funktionalitäten des Empfängers (2) für den durch die Dienstansagenachricht betroffenen Dienst ausgewählt wird,
wobei die Anweisungsimplementierungseinrichtung vorzugsweise zum Empfangen der Steuerungsanweisungen vorgesehen ist, die durch eine Einrichtung zum Senden von Steuerungsanweisungen gemäß einem der Ansprüche 1 bis 11 gesendet werden.

14. Empfänger (2) von Nachrichten (MSG), **dadurch gekennzeichnet, daß** er eine Implementierungseinrichtung nach Anspruch 13 umfaßt, wobei der Empfänger vorzugsweise zum Empfangen der Nachrichten (MSG) vorgesehen ist, die aus einem Absender (1) von Nachrichten nach Anspruch 12 stammen.

15. Computerprogrammprodukt, **dadurch gekennzeichnet, daß** es Funktionalitäten zum Implementieren der Mittel (14, 24) der Einrichtung zum Senden von Steuerungsanweisungen gemäß einem der Ansprüche 1 bis 11 oder der Einrichtung zur Implementierung von Steuerungsanweisungen gemäß Anspruch 13 umfaßt.

16. Nachricht (MSG), die dafür bestimmt ist, über ein Netzwerk zu mindestens einem Empfänger (2) ausgesendet zu werden, wobei die Nachricht mindestens eine Zulassungskennung (PERM) enthält,
**dadurch gekennzeichnet, daß** die Nachricht (MSG) eine Dienstansagenachricht ist, wobei die Zulassungskennung (PERM) aus einem Indikator mit einem Wert besteht, der aus einem Autorisierungswert und einem Verbotwert in bezug auf den Zugriff auf mindestens eine Funktionalität des Empfängers (2) für den durch die Dienstansage betroffenen Dienst ausgewählt wird,
wobei die Nachricht (MSG) vorzugsweise mittels einer Übertragungseinrichtung nach einem der Ansprüche 1 bis 11 erhalten wird.

17. Prozeß zum Senden von Steueranweisungen zum Zugriff auf Funktionalitäten mindestens eines Empfängers (2), gemäß dem Zulassungskennungen (PERM) in für den Empfänger (2) bestimmten Nachrichten (MSG) registriert werden,
**dadurch gekennzeichnet, daß** die Zulassungskennungen (PERM) in Dienstansagenachrichten (MSG) registriert werden, wobei die Zulassungskennungen aus Indikatoren bestehen, die jeweils einen Wert aufweisen, der aus einem Autorisierungswert und einem Verbotwert in bezug auf den Zugriff auf mindestens eine der Funktionalitäten des Empfängers (2) für den durch die Dienstansagenachricht betroffenen Dienst ausgewählt wird,
wobei der Prozeß zum Senden von Steueranweisungen vorzugsweise mittels einer Übertragungseinrichtung nach einem der Ansprüche 1 bis 11 implementiert wird.

18. Prozeß zum Implementieren von Steuerungsanweisungen zum Zugriff auf Funktionalitäten eines Empfängers (2), gemäß dem Zulassungskennungen (PERM) aus durch den Empfänger (2) empfangenen Nachrichten (MSG) gelesen werden,
**dadurch gekennzeichnet, daß** die Zulassungskennungen (PERM) aus Dienstansagenachrichten (MSG) gelesen werden, wobei die Zulassungskennungen aus Indikatoren bestehen, die jeweils einen Wert aufweisen, der aus einem Autorisierungswert und einem Verbotwert in bezug auf den Zugriff auf mindestens eine der Funktionalitäten des Empfängers (2) für den durch die Dienstansage betroffenen Dienst ausgewählt wird,
wobei der Prozeß zum Implementieren von Steuerungsanweisungen vorzugsweise mittels einer Implementierungseinrichtung nach Anspruch 13 implementiert wird.

## Revendications

1. Dispositif pour la transmission d'instructions de contrôle pour accéder à des fonctionnalités d'au moins un récepteur (2), ledit dispositif de transmission comportant des moyens (14) pour enregistrer des identificateurs d'autorisation (PERM) dans des messages (MSG) destinés audit récepteur (2),
**caractérisé en ce que** les moyens d'enregistrement (14) sont fournis pour enregistrer les identificateurs d'autorisation (PERM) dans des messages d'information de service (MSG), lesdits identificateurs d'autorisation se composant d'indicateurs ayant chacun une valeur choisie à partir d'une valeur d'autorisation et d'une valeur d'interdiction concernant l'accès à au moins une desdites fonctionnalités du récepteur (2) pour le service concerné par le message d'information de service.

2. Dispositif de transmission selon la revendication 1, **caractérisé en ce que** chacun desdits messages d'information (MSG-A, MSG-B) comporte une zone d'authentification (AUTH-A, AUTH-B) de longueur variable, et les moyens d'enregistrement (14) sont fournis pour enregistrer les identificateurs d'autorisation (PERM) dans ladite zone d'authentification.

3. Dispositif de transmission selon une des revendications 1 ou 2, **caractérisé en ce que** chacun desdits messages d'information (MSG-C) comporte une zone de données utiles (SDP-C), et les moyens d'enregistrement (14) sont fournis pour enregistrer les identificateurs d'autorisation (PERM) dans ladite zone de données utiles.

4. Dispositif de transmission selon l'une quelconque des revendications précédentes, **caractérisé en ce qu'**il comporte également des moyens de contrôle de chiffrement (11-A, 11-A') pour signer au moins une partie de chacun desdits messages, ladite partie comprenant les identificateurs d'autorisation (PERM).

5. Dispositif de transmission selon l'une quelconque des revendications précédentes, **caractérisé en ce que** lesdits messages d'information (MSG) sont choisis parmi des messages d'information de service ATVEF et de service système.

6. Dispositif de transmission selon l'une quelconque des revendications précédentes, **caractérisé en ce qu'**au moins un desdits identificateurs d'autorisation (PERM) concerne des fonctionnalités pour l'accès, de préférence automatique, à un modem pour initier une connexion à un premier serveur en ligne d'un opérateur de service.

7. Dispositif de transmission selon la revendication 6, **caractérisé en ce que** ledit opérateur de service est connecté audit dispositif de transmission.

8. Dispositif de transmission selon l'une quelconque des revendications précédentes, **caractérisé en ce qu'**au moins un desdits identificateurs d'autorisation (PERM) concerne des fonctionnalités pour l'utilisation d'une connexion sécurisée à un deuxième serveur en ligne.

9. Dispositif de transmission selon l'une quelconque des revendications précédentes, **caractérisé en ce qu'**au moins un desdits identificateurs d'autorisation (PERM) concerne des fonctionnalités pour l'accès, de préférence automatique, à au moins un espace de stockage pour la lecture de données ou l'écriture de données de manière permanente depuis ou vers ledit espace de stockage

10. Dispositif de transmission selon la revendication 9, **caractérisé en ce que** ledit espace de stockage appartient à la liste comprenant un disque dur, une mémoire flash et une carte à puce.

11. Dispositif de transmission selon l'une quelconque des revendications précédentes, **caractérisé en ce qu'**au moins un desdits identificateurs d'autorisation (PERM) concerne des fonctionnalités pour l'accès à un syntoniseur dudit récepteur (2) afin de modifier une station actuelle.

12. Emetteur (1) de messages (MSG) **caractérisé en ce qu'**il comporte un dispositif de transmission selon l'une quelconque des revendications 1 à 11.

13. Dispositif pour la mise en oeuvre d'instructions de contrôle pour accéder à des fonctionnalités d'un récepteur (2), ledit dispositif de mise en oeuvre comportant des moyens (24) pour la lecture d'identificateurs d'autorisation (PERM) dans des messages (MSG) reçus par ledit récepteur (2),
**caractérisé en ce que** les moyens de lecture (24) sont fournis pour lire les identificateurs d'autorisation (PERM) dans des messages d'information de service (MSG), lesdits identificateurs d'autorisation se composant des indicateurs ayant chacun une valeur choisie à partir d'une valeur d'autorisation et d'une valeur d'interdiction concernant l'accès à au moins l'une desdites fonctionnalités du récepteur (2) pour le service concerné par le message d'information de service,
ledit dispositif de mise en oeuvre d'instructions étant de préférence fourni pour recevoir lesdites instructions de contrôle transmises par un dispositif pour transmettre des instructions de contrôle selon l'une quelconque des revendications 1 à 11.

14. Récepteur (2) de messages (MSG) **caractérisé en ce qu'**il comporte un dispositif de mise en oeuvre selon la revendication 13, ledit récepteur étant de préférence fourni pour recevoir lesdits messages (MSG) provenant d'un émetteur (1) de messages selon la revendication 12.

15. Produit-programme informatique, **caractérisé en ce qu'**il comporte des fonctionnalités pour mettre en oeuvre les moyens (14, 24) du dispositif pour transmettre des instructions de contrôle selon l'une quelconque des revendications 1 à 11 ou du dispositif pour mettre en oeuvre des instructions de contrôle selon la revendication 13.

16. Message (MSG) destiné à être réparti sur un réseau vers au moins un récepteur (2), ledit message comprenant au moins un identificateur d'autorisation (PERM),
**caractérisé en ce que** ledit message (MSG) est un message d'information de service, ledit identificateur d'autorisation (PERM) se composant d'un indicateur ayant une valeur choisie à partir d'une valeur d'autorisation et d'une valeur d'interdiction concernant l'accès au moins à une fonction dudit récepteur (2) pour le service concerné par le message d'information de service,
ledit message (MSG) étant de préférence obtenu à l'aide d'un dispositif de transmission selon l'une quelconque des revendications 1 à 11.

17. Procédé pour la transmission d'instructions de contrôle pour accéder à des fonctionnalités d'au moins un récepteur (2), selon lesquelles des identificateurs d'autorisation (PERM) sont enregistrés dans des messages (MSG) destinés audit récepteur (2),
**caractérisé en ce que** les identificateurs d'autorisation (PERM) sont enregistrés dans des messages d'information de service (MSG), lesdits identificateurs d'autorisation se composant d'indicateurs ayant chacun une valeur choisie à partir d'une valeur d'autorisation et d'une valeur d'autorisation concernant l'accès à au moins une desdites fonctionnalités du récepteur (2) pour le service concerné par le message d'information de service,
ledit procédé de transmission des instructions de contrôle étant de préférence mis en oeuvre à l'aide d'un dispositif de transmission selon l'une quelconque des revendications 1 à 11.

18. Procédé pour la mise en oeuvre d'instructions de contrôle pour accéder à des fonctionnalités d'un récepteur, selon lequel des identificateurs d'autorisation (PERM) sont lus à partir de messages (MSG) reçus par ledit récepteur (2),
**caractérisé en ce que** les identificateurs d'autorisation (PERM) sont lus à partir des messages d'information de service (MSG), desdits identificateurs d'autorisation se composant des indicateurs ayant chacun une valeur choisie à partir d'une valeur d'autorisation et d'une valeur d'interdiction concernant l'accès au moins à une desdites fonctionnalités du récepteur (2) pour le service concerné par le message d'information de service,
ledit procédé pour la mise en oeuvre des instructions de contrôle étant de préférence mis en oeuvre à l'aide d'un dispositif de mise en oeuvre selon la revendication 13.
